Europäisches Patentamt

European Patent Office

Office européen des brevets

(11) Publication number: **0 425 229 A1**

## EUROPEAN PATENT APPLICATION

(21) Application number: 90311575.6

(22) Date of filing: 23.10.90

(51) Int. Cl.5: **G01J 5/08**

(30) Priority: 25.10.89 US 427179

(43) Date of publication of application:
**02.05.91 Bulletin 91/18**

(84) Designated Contracting States:
**AT BE CH DE DK FR GB IT LI NL SE**

(71) Applicant: TACAN CORPORATION
2330 Faraday Avenue,
Carlsbad California 92008(US)

(72) Inventor: Lee, Kyung-Shik
3408 Calle Cancuna
Carlsbad, California 92008(US)
Inventor: Toms, Denis J.
2323 Oceanstreet, Apt. No. 38
Carlsbad, California 92008(US)

(74) Representative: Spall, Christopher John et al
BARKER, BRETTELL & DUNCAN 138 Hagley
Road
Edgbaston Birmingham B16 9PW(GB)

(54) **High temperature sensor.**

(57) Apparatus and a method of use thereof for measuring the temperature of a high temperature object or environment are disclosed. The apparatus includes a black body or gray body detector (1) which detects radiation characteristic of that temperature and emits characteristic radiation in response thereto, a hollow light guide and transmitter (5) which transmits the emitted radiation to an optics array (46) which focuses the light onto a signal generator (57) which, from a previously correlated property of the light such as wavelength distribution or intensity converts that light into a signal characteristic of the detected property, and a signal processor (56) in which the signals are analyzed to determine and display the observed temperature of the object or environment in real time. Temperatures of from 500°C-3500°C (930°F-6330°F) may be measured. Utility is in the field of temperature measurements of high temperature materials, such as molten metals, and devices, such as gas turbine blades, especially under dynamic operating conditions.

FIG. I

# HIGH TEMPERATURE SENSOR

## FIELD OF THE INVENTION

The invention herein relates to measurement of elevated temperatures, especially those in the range of 500°-3500°C (930°-6330°F).

## BACKGROUND OF THE INVENTION

The elevated temperature environment is a particularly difficult region in which to measure temperatures accurately and easily. Many ordinary temperature measuring devices, such as thermocouples and optical fiber thermometers, simply are destroyed or otherwise do not operate in that environment.

In the past specialized devices have been designed to determine elevated temperature measurements. The most common are optical and radiation pyrometers. Optical pyrometers measure the temperature by comparison of the brightness of a heated object in the environment with that of a source of standard brightness. Radiation pyrometers measure the rate of energy emission over a broad spectrum of wavelengths or by comparison of radiation at two wave lengths.

Pyrometers for use in hostile environments have suffered from several deficiencies. Most importantly, they must be used from a remote location, since the temperatures and other environmental conditions involved are such that the user cannot operate the device close to the heat source. Having the device at a remote location necessarily introduces errors into the determination of the temperature. In addition, many of the devices require a prolonged period of operation in order to measure the temperature. This can raise serious problems of operation and use in hostile environments. Finally, some of the prior devices rely on subjective comparison, such as that of relative brightness, and are therefore subject to systematic errors when used by different operators or even by the same operator under different conditions.

Several devices have been proposed to overcome the deficiencies of the standard high temperature optical pyrometers. U.S. Patent No. 4,576,486 discloses a solid optical rod thermometer for measurement of temperature up to 2400°C (4350°F). The thermometer operates by placement in the high temperature environment of a black body cavity formed around the end of a solid sapphire optical rod. Light emitted from the cavity is transmitted through this fiber to a sensor system which correlates the light sensed with the temperature of the environment. Focusing of the light is difficult and the photometric and emissivity errors vary substantially over the temperature range of interest. U.S. Patent No. 4,313,344 shows an optical fiber thermometer for use in steel production furnaces in which heat radiation from a black body cavity is emitted into an optical fiber conduit. The optical fiber conduit is then split into two light paths, each running to a separate detection and measurement system.

Industrial environments such as steel furnaces, while operating at high temperature, can generally be considered to be essentially static conditions. Optical thermometers of the types described above may operate satisfactorily in such environments, but are not normally capable of providing suitable measurements in dynamic environments. Among the high temperature environments which are highly dynamic are molten metal pools, such as ladies of molten steel, and the interior of turbine engines, where turbine blades are turning at up to 8000 rpm in very high temperatures. In situations such as these, real-time measurement of the temperatures involved is of critical importance. The problems of obtaining such real-time measurements of high temperature and some of the prior art systems which have been proposed to accomplish this are shown in U.S. Patents Nos. 3,623,368; 4,326,798 and 4,528,426.

Further, in the past it has been considered that circular hollow waveguides made of dielectric material or metal were not suitable for long distance optical transmission because the optical loss introduced by the curvature of the guide axis in the hollow waveguide is more severe than the optical loss in the optical fiber. Hollow waveguides such as metallic waveguides, dielectric waveguides and dielectric coated metallic waveguides have been successfully used for high power transmission of $CO_2$ laser beams, but only where the transmission distance is very short, the waveguide is designed so that the optical loss due to the bending is minimum, and the laser induced-damage threshold of the hollow waveguide is very high.

It would of course be desirable for a system useful in measuring temperature in dynamic environments to also be applicable to environments which are relatively more static, such as material science, manufacturing quality control and combustion technology. Such environments are described in, for instance, U.S.

Patents Nos. 2,709,367; 4,468,771 and 4,446,723. A system of intermittent dynamic condition, the operation of a cutting tool, is described in U.S. Patent No. 3,579,775.

## SUMMARY OF THE INVENTION

In its broadest form, the temperature measuring system of this invention includes, in one aspect, apparatus for measuring the temperature of an object or environment of up to about 3500°C, which comprises detection means to absorb heat emitted from the object or environment and to emit light radiation in response to the absorption of that heat, the wavelength distribution and intensity properties of the light radiation being functions of the temperature of the object or environment; hollow light radiation guiding and transmitting means to receive at least a portion of the emitted responsive light radiation and to transmit it to an optics array; said optics array comprising means to detect the transmitted portion of the emitted responsive light radiation and from at least one of its properties of wavelength distribution and intensity, to generate an electrical signal having at least one measurable component directly related to the detected properties; and signal processing means connected to the optics array to receive the signal and to determine therefrom the temperature of the object or environment.

Further, this invention includes, in another aspect, a method of measuring the temperature of an object or environment of up to about 3500°C, which comprises detecting heat emitted from the object or environment; emitting light radiation in response to the detection of that heat, the wavelength distribution and intensity properties of the light radiation being functions of the temperature of the object or environment; guiding and transmitting at least a portion of that emitted responsive light radiation through a hollow light guiding and transmitting means to an optics array; in that optics array detecting the transmitted portion of the emitted responsive light radiation and from at least one of its properties of wavelength distribution and intensity generating a signal having at least one measurable property directly related to the detected properties; and processing that signal to determine therefrom the temperature of the object or environment.

In a preferred embodiment of the invention herein, the light guiding and transmitting means is a waveguide in the form of a hollow elongated tube having a spectrally reflective inner surface. In another preferred embodiment, the light guiding and transmitting means is in the form of a hollow tube having at least one focusing lens disposed therein.

Yet another preferred embodiment of the invention includes fiber optics means disposed intermediate the light guiding and transmitting means and the optics array to transmit the light radiation from the light guiding means to the optics array.

In yet another preferred embodiment, the radiation property detected is a portion of the wavelength distribution thereof and the temperature of the object or environment is determined by comparison thereof with a predetermined correlation of wavelength and temperature. In yet another preferred embodiment, there are a plurality of portions of the wavelength distribution detected, and the temperature of the object or environment is determined by comparison of those portions with each other and with a predetermined correlation of the differences therebetween and temperature.

In yet another preferred embodiment, the radiation property detected is the intensity thereof and the temperature of the object or environment is determined by comparison thereof with a predetermined correlation of intensity and temperature.

In yet another preferred embodiment the detection means comprises a black body or gray body emitter in the form of a cavity or a metal or ceramic body which is heated by the radiation from the object or environment to the temperature of the object or environment and in response to the heating emits radiation characteristic of the temperature of the emitter.

## BRIEF DESCRIPTION OF THE DRAWINGS

Figure 1 is a schematic diagram of the temperature sensing system of this invention in which the guiding and transmitting means is in the form a hollow tube having at least one lens disposed therein.

Figures 2-15 are schematic diagrams of different embodiments of the high temperature detection means and the radiation guiding and transmitting means of the system of Figure 1.

Figure 16 is a schematic diagram of another embodiment of the system of Figure 1.

Figure 17 is a schematic diagram of the temperature sensing system of this invention in which the radiation guiding and transmitting means is in the form of a hollow high temperature waveguide.

Figures 18-25 are schematic diagrams of different embodiments of the high temperature detection means and the radiation guiding and transmitting means of the system of Figure 17.

Figures 26 and 27 are schematic diagrams of hollow waveguides with reflective coatings.

Figures 28 and 29 are power versus propagation distance graphs for hollow sapphire and tungsten waveguides for radiation of 0.8-1.0 $\mu$m and 1.1-1.3 $\mu$m respectively.

Figure 30 is a graph of total power versus bending radius for hollow waveguides of two different diameters.

Figure 31 is a schematic diagram of a portion of an embodiment of the present invention in which an intermediate light guide focuses the light radiation onto an optics array which splits the light beam and compares the components.

## DETAILED DESCRIPTION OF THE INVENTION

The temperature measuring system of this invention operates rapidly, accurately and easily in real-time dynamic environments in which presently existing thermometries, such as thermocouples, resistance thermometers, pyrometers and optical fiber thermometers either do not work at all or do not readily and easily provide sufficient accuracy at high speed and in real-time contexts.

Before proceeding to the description of the invention, it is instructive to consider an analysis of how well a circular hollow waveguide can guide radiant flux from an emitting black body cavity along a 0.3-1 m (1-3 ft) long hollow waveguide. (This model is intended to be only exemplary and to provide those skilled in the art with a general understanding of the concepts involved in this invention. It should not be considered to be exhaustive or limiting of the actual invention as described and claimed herein.) In this model, both the dielectric and metallic hollow waveguides are considered as a special case of a general circular hollow waveguide having an external medium whose optical properties are characterized by a finite complex refractive index. The field refracted into the external medium is generally reflected back into the tube and is added to the field inside the air core. But throughout the following analysis, we assumed that the outside thickness of the tube (or hollow waveguide) is thick enough so that the refracted field does not come back to the air core.

When the cavity emitting temperature-induced radiation emits radiation, many modes will be exited in the high temperature hollow waveguide. This radiation is incoherent and unpolarized. The magnitude and the spectral distribution of the radiation is a function of the temperature of the cavity emitting temperature induced radiation. The propagation of the radiation can be described by the power propagation of the electromagnetic field. The electromagnetic field (or the radiation) propagates along the axial direction with different propagation constants and loses some power in the radial direction. The power loss of each mode after a distance z along the axial direction differs and is expressed by

$$e^{-2\alpha_{nm}z}$$

where $\alpha_{nm}$ is an attenuation coefficient of the mode designated by mode numbers n and m. For a typical circular hollow waveguide made of sapphire having an inner diameter of 0.5 mm, the attenuation constants of the 300 lowest modes range from $1.6 \times 10^{-5}$ cm$^{-1}$ to $8 \times 10^{-3}$ cm$^{-1}$ at wavelength 1.0 um. For a hollow waveguide made of tungsten with same inner diameter they range from $3.2 \times 10^{-6}$ cm$^{-1}$ to $8 \times 10^{-3}$ cm$^{-1}$ at wavelength 1.0 $\mu$m. This shows that the radiation will propagate with very little loss (average about 19 %) along a circular hollow waveguide with length 30 cm if the radiation modes are uniformly distributed among the lowest 300 modes, which may be controlled by the cavity shape.

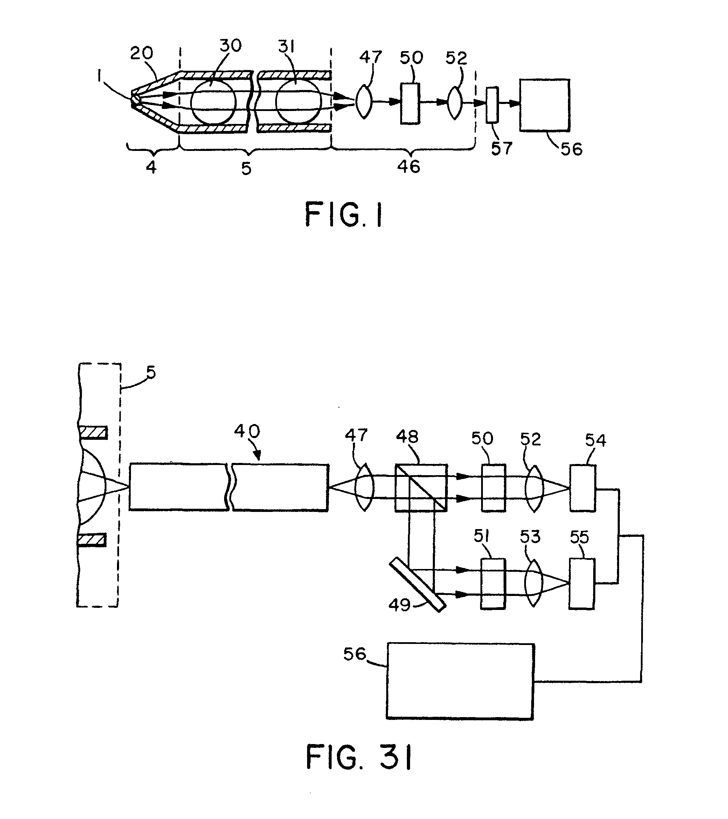

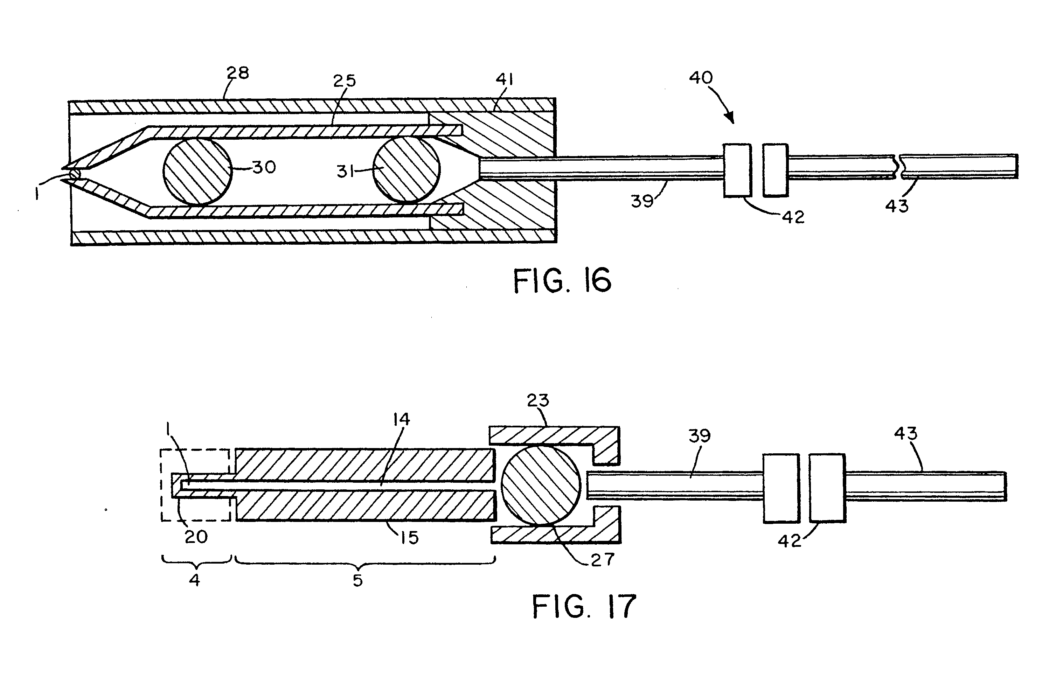

The overall system configuration is shown in Figures 1 and 17. The system consists of high temperature sensing means 4, light guiding and transmitting means 5, detection optics array 46, signal generator 57 and signal processor 56.

Considering first the embodiments shown in Figures 1-16, the sensing means 4 comprises emission means 1 which detects the heat from the subject device or environment and in response to the temperature thereof emits temperature-induced radiation characteristic of the emitter. Emission means 1 is housed in support means 20.

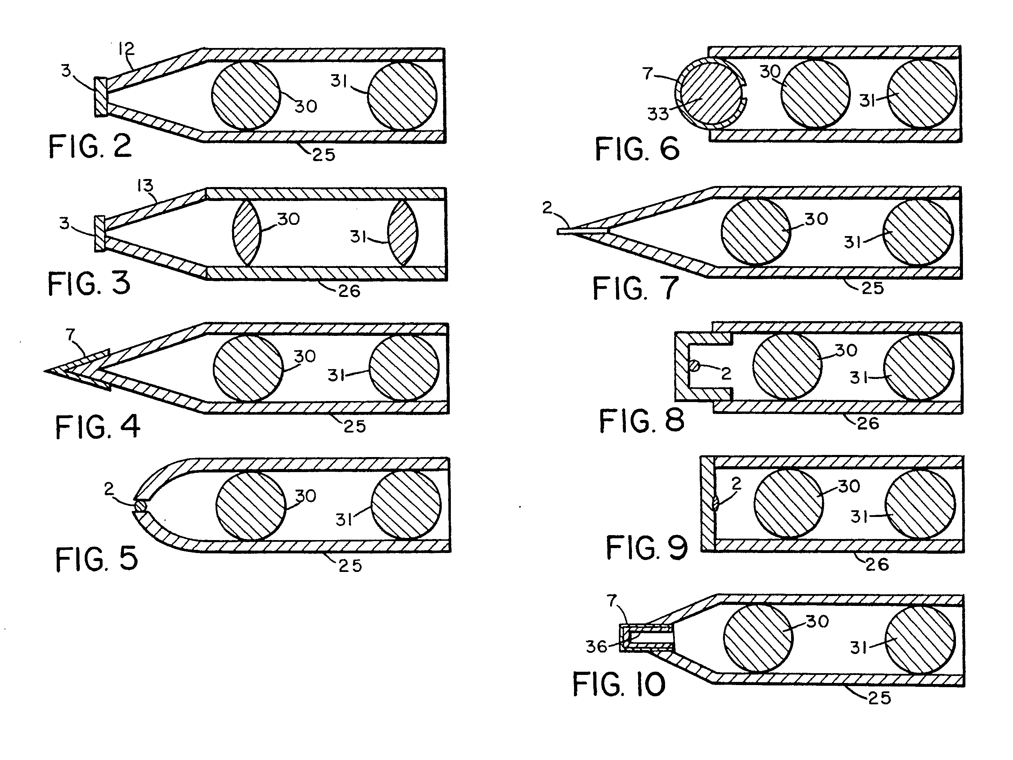

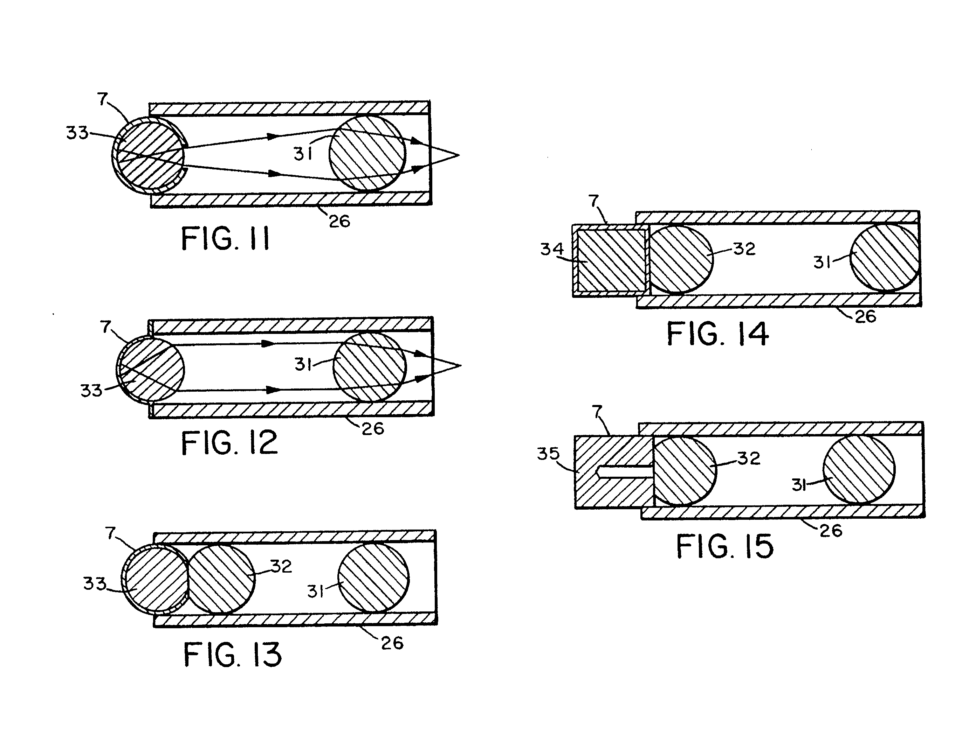

The emission means 1, which may also be referred to as a radiation-emitting member, is in the form of a black body or gray body cavity 7 or is a material in the form of a dot 2 or film or coating 3. Figures 2-15 illustrate some of the variety of the forms the emission means 1 may take. As a coating or film, the emission means 1 may be formed by sputtering, evaporation, dipping, coating or similar conventional methods. As a dot the emission means may be formed by dipping, coating or similar conventional methods. As a plate it may be formed of a radiant metal or ceramic. As a black body cavity, the emission means may be formed by a variety of methods, depending on the shape (spherical, cylindrical, conical, etc.) of the cavity. A spherical cavity (as in Figure 6) may be formed by sputtering a thin optically dense metallic or oxide coating on the surface of a transparent sphere (or ball) 33 made of a high temperature material. A hollow cylindrical cavity (as in Figure 10) can be created by sputtering a thin, optically dense metallic or oxide coating on the outer or inner surface of a high temperature tube 36 of which one side is closed. A solid cylindrical body (as in Figure 14) can be created by sputtering a thin, optically dense metallic or oxide coating on the surface of a transparent cylindrical rod 34 made of a high temperature material. The black body cavities formed by sputtering a thin, optically dense metallic or oxide coating can have more than one layer of the metallic coating or oxide coating. For instance, the black body cavity shown in Figure 15 can be formed by drilling a small hole at the center of the back side of a cylindrical rod 35. Suitable high-temperature metals for such metallic rods may be tungsten, tantalum, molybdenum, iridium, niobium or other similar high temperature metals or carbides or alloys thereof, including stainless steel. The exit of the black body cavity can be made by conventional methods, preferably etching, drilling, grinding and polishing.

The emission means 1 is mounted in support means 20 which is in the form of a high-temperature conduit. This may be a structure 13 separate from the means 26 supporting the focusing means (Figure 3) or the two may be integral as shown with structure 12 and means 25 (Figure 2). Both can be made of high temperature ceramics or metals. The conduit 12/13 is generally in the form of a cone (Figures 2-4) which may be truncated (Figures 2-3), a cylinder (Figures 6 and 8) or a rounded ellipsoid or structure resembling an ellipsoid (Figure 5). If in conical form, the inner angles of the support means 20 will preferably be in the range of 10°-170°. The hollow support means 20 will be opaque to the emitted radiation so noise light will not be a problem, and is preferably sealed to keep the environmental gases, smoke, particulate materials and the like out of the conduit so that they will not absorb or distort the emitted radiation. If sealed, the support means 20 may also be evacuated.

The amplitude and the frequency spectra of the radiation from the emission means 1 is a measure of the temperature of the emission means. This radiation is isotropic, unpolarized and usually has a continuous distribution of frequencies. The temperature of the emission means 1 is, because of its presence in or proximity to the object or environment of interest, essentially the temperature of the object or environment itself once equilibrium of the apparatus is established, or is at least directly related thereto by a predetermined calibration. Thus the emitted radiation can be taken as a direct indication of the temperature of the object or environment.

In this embodiment the light guiding and transmitting means 5 consists of at least one lens 31 (as in Figures 11 and 12), or preferably two lenses 30 and 31 (as in Figures 2-10) or 32 and 31 (as in Figures 13-15), mounted in the wave guiding high temperature tube 25/26. When the size of the emission means 1 (i.e., the dot, film, plate or cavity opening) is much smaller than the size of the lens, the emission means 1 will act as a radiation-emitting point source and the radiant flux from the source will be collimated by the first lens 30 located away from the point source by approximately the lens focal length. Here, the lens focal length is taken as an average value of the focal length throughout the wavelength range of interest, because the lens focal length is a function of the wavelength. Also, the lens focal point is a function of the temperature of the tube 25/26 and lens 30. However, the effect of the temperature for a ceramic lens can be considered negligible, because the thermal expansion coefficient and thermo-optic constant (dn/dt) of typical ceramic materials are very small.

Lenses 30 and 31 are either ball (or sphere) lenses or simple or complex lenses. Lens 32 is either a truncated ball lens or a simple (or complex) lens. The lenses 30, 31 and 32 and the black body cavities can either be bonded to the support means by high temperature adhesives or be fused to it by melting. They may also be held in place mechanically by a press fit or a shrink fit to the support means More than two lenses can be used to guide the radiant flux. The length of the high temperature tube 25 can be from a few centimeters to as long as 1 meter or more.

The lenses 30, 31 and 32, the sphere 33 and the rod 34 are made of high temperature materials which are transparent to the radiation in the wavelength range of interest (typically from 0.2 $\mu$m to at least 7 $\mu$m), such as sapphire, zirconia, yttria, magnesia, titania or quartz. For the lenses of Figures 2-12, in which lens 30 is not in contact with the emission means 1, one can use materials such as sapphire which have a refractive index less than 2.0 for the first lens 30. For the lens 32 in Figures 13-15, which is in contact with the emission means, it is preferred to use materials such as zirconia or diamond which have a refractive index greater than 2.0. The refractive index of the lens 31 can be either less than or greater than 2.0. When the refractive indices of the lenses 31 and 32 are both greater than 2.0, the lenses should be truncated as shown in Figure 14 so that the radiant flux emitting from the point source is collimated by the first lens 32 and focused outside of the second lens 31 as shown.

As shown in Figures 13-15, the emission means 1 in the form of a black body cavity can be bonded to the first lens 32.

Stray light (light noise) from the outside can be excluded in a number of ways, one of which is by enclosing the detection and transmission components in an opaque housing 28 (Figure 16) which is preferably open at the end. Other techniques will be discussed herein.

We consider next the embodiments shown in Figures 17-27. These Figures illustrate embodiments of this invention which utilize hollow waveguides such as dielectric hollow waveguides, metallic hollow waveguides and dielectric-coated metallic hollow waveguides for guiding the radiation emitted by the temperature-induced radiation-emitting material the optics array, preferably thorugh a focusing lens.

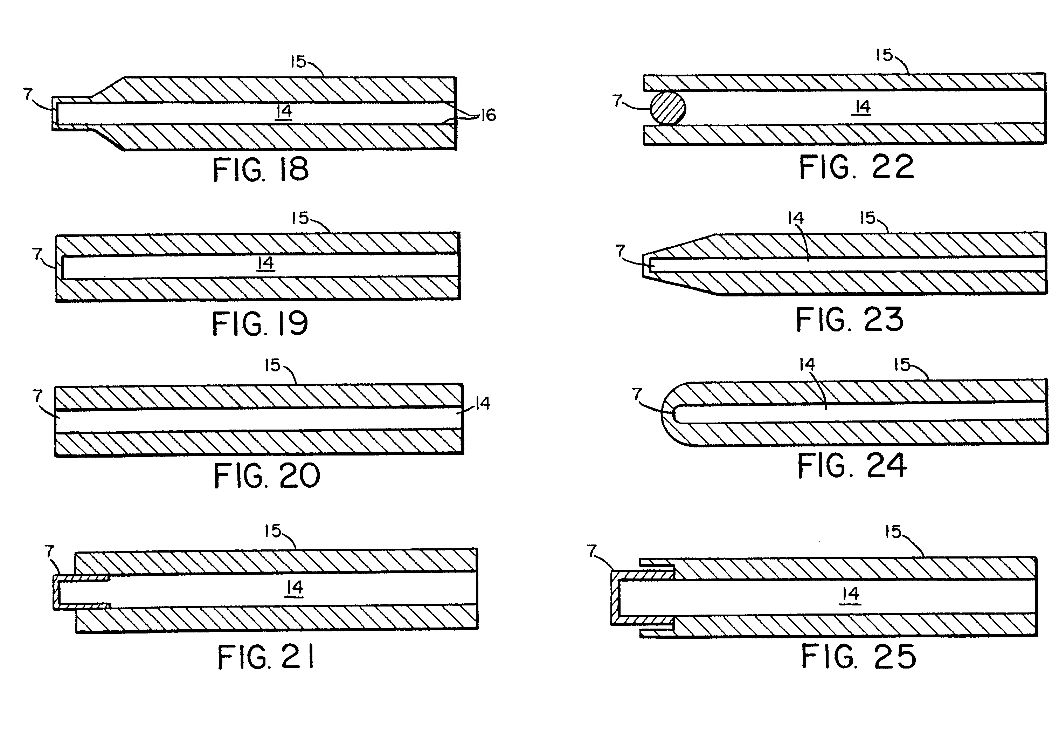

In these embodiments a metallic cavity or a thin optically dense metallic film or oxide film coated ceramic cavity is used as the high temperature sensing means 1. When the inside of the cavity is so diffused and dark that all the incident light is completely absorbed, this cavity acts as a blackbody cavity. The emissivity of the blackbody cavity is unity and the spectrum and magnitude of the radiation of this blackbody radiation at uniform temperature is well defined by the Plank distribution. Therefore, the insides of the cavities 7 acting as the high temperature sensing means 1 are preferred to have diffused inner surfaces as shown in Figure 25. The diffused inner surface of the cavity can be made by micro-tapping, scratching, micro-roughing or other type of treatment. The emission cavities 7 are formed at the end of the high-temperature waveguides 14 which are formed within circular casings 15. The emission cavities 7 and the high-temperature waveguides 14 can be made as one piece as shown in Figures 17, 18, 19, 23 and 24. In this case only the end portion which is about 1-3 times longer than the inner diameter of the tube 14 acts as a high temperature sensing means in the form of a blackbody cavity. The high temperature sensing means 1 in Figure 20 is open-ended and in the form of a small hole. Alternately, separate emission cavities 7 may be attached to or within the end of the waveguide 14 as shown in Figures 21, 22 and 25. A segment of casing 15 may be thinned to improve the temperature response time as shown in Figures 19, 23 and 24. The emission cavity 7 may be connected to the end of the waveguide 14 by a force fit as shown in Figures 21 and 22 or by threading as shown in Figure 25. The end of the cavity may be curved, flat or tapered.

The emission cavity 7 may be made of high temperature metal, but can be also made of transparent ceramic having an optically dense film coating or optically dense material diffused therein. Transparent ceramics mean ceramics which are transparent to the wavelength of interest. The separate emission means 7 in Figure 21 is either a transparent ceramic tubing coated with optically dense (or metallic) film or a high temperature metallic tube. The separate emitter 1 in Figure 22 is a transparent ceramic ball whose entire surface except the emitting area is covered by the optically dense (or metallic) film. Generally, as described above, materials for the emission cavity means and the waveguide casing 15 can be either metals such as tungsten, tantalum, molybdenum, iridium, niobium or other high temperature materials such as carbides and metallic alloys, including stainless steel, or ceramic materials such as sapphire, zirconia, yttria, magnesia, titania, quartz or graphite. Materials for the emission cavity means are preferably high heat conducting optically dense or opaque materials because materials with high heat conduction speed up the sensing response. The interior cavity 14 in the casing 15 will have optically smooth walls 16 for efficient light propagation.

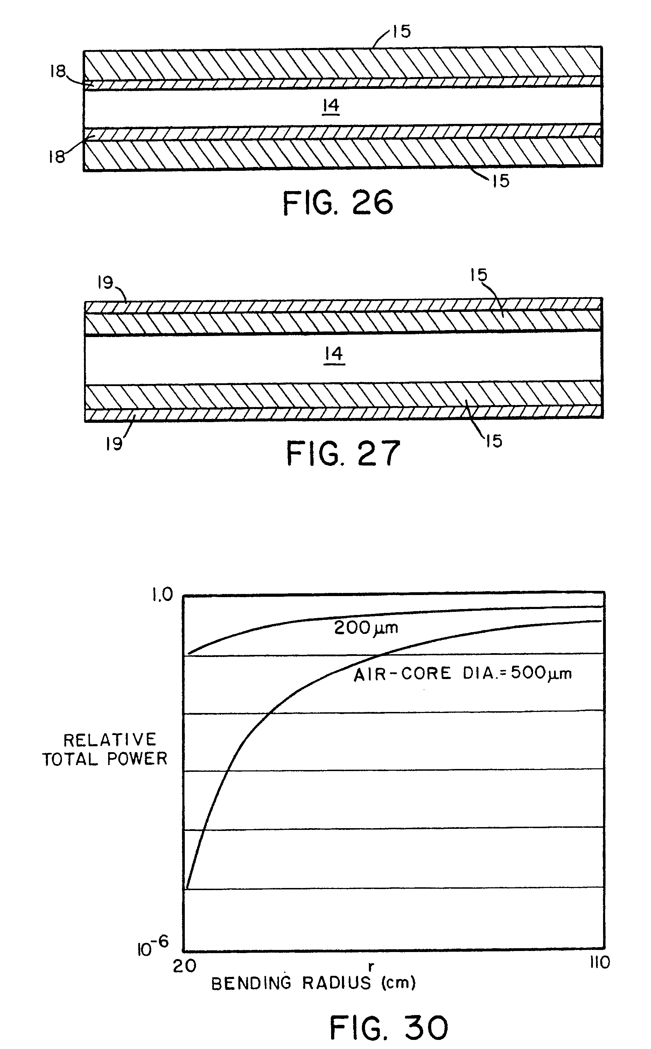

The circular hollow waveguide casings 15 are made of high temperature metals, high temperature ceramics, high temperature metallic alloys, high temperature materials with dielectric coating, or high temperature ceramic materials with metallic film coating. The dielectric material is a kind of ceramic material and can be usually assumed to be absorption-free. The high temperature circular hollow waveguides 15 can be made of either high temperature metals (or alloys) or high temperature ceramic materials. However, they can also be multilayer casings formed of metallic or ceramic hollow waveguides having internal dielectric coatings as shown in Figure 26 or high temperature ceramic hollow waveguides with external metallic film coatings as shown in Figure 27. The high temperature circular hollow waveguide shown in Figure 26 can be made by coating dielectric film 18 on the inside (or outside) surface of the metallic or ceramic casing 15. The high temperature circular hollow waveguide shown in Figure 27 can be made by coating metallic film 19 on the outside (or inside) surface of the ceramic casing 15. The inside of the casing 15 forming circular hollow waveguide 14 is optically smooth and spectrally reflective (except the high-temperature sensing area of the blackbody cavity where inner surface is intentionally made rough). If the inside of the hollow waveguide 14 is made of materials which tend to become oxidized in air at high temperature the waveguide should be sealed and either be in vacuum or be filled with an inert non-oxidizing gas such as argon, nitrogen, neon or krypton. Materials for the high temperature hollow waveguide are preferably low heat conducting opaque materials, because opaque materials can block stray light from the outside of the tubes and materials with low heat conductivity will minimize thermal diffusion from the radiation-emitting material.

The radiation propagating through the light guiding and transmitting means 5 (waveguide 14 or lens/support tube 25/26:30/31/32) can be transmitted directly to optics array 46 as shown in Figure 1. More preferably, however, it is focused by lens 27 or 31 onto the entry end of a low temperature light guiding means 40 (typically, optical fiber 39) which is coupled to the transmitting means 5 by coupler 37 or 41. The light guiding means 40 is formed of at one light guiding means 39, which may lead directly to the optics array 46, as shown in Figure 31. It is preferred, however, that the light guiding means 39 transmit the light to a second light guiding means 43. As a practical matter, this allows the two light guiding means 39 and 43 to be of different temperature resistances so that fiber 39 can be in close proximity to the high temperature environment and is therefore referred to as the "high temperature" fiber, while fiber 43 is of normal temperature resistance and allows the optics array 46 and electronic sensing system 57/56 to be located at a position spaced apart from the high temperature object or environment by several meters or more in an economical manner. The high temperature light guiding means 39 can be permanently connected to the low temperature light guiding means 43 by a connector 42. The length of the low temperature light guiding means 43 commonly ranges from one to several tens of meters. However, if desired, it can be extended further by connection to further lengths of low temperature optical fiber 43 by additional connectors 42 in the manner shown in Figure 16. The high temperature light guiding means 39 will normally be a quartz glass optical fiber or a ceramic oxide optical fiber. Materials for the low temperature light guiding means 43 include infrared optical fibers such as fluoride glass optical fibers, chalcogenide fibers, polycrystalline fibers, single crystal fibers, silver halide fibers, zinc selenide optical fibers and fused silica optical fibers. The connector 42 can be a rotary joint.

Various embodiments of the optics array 46 and electronic sensing and output system 57/56 are shown in Figures 1 and 31. Which embodiment will be used will depend on what property of the radiation is being measured and whether that property is being analyzed directly or by beam splitting and comparison. As noted above, the two properties most readily correlated with the temperature of the subject device or environment and with the resultant black- or gray-body radiation emitted by emission means 1 are the emitted light radiation intensity and wavelength distribution. (It will be noted for the purposes of this invention that the "light" emitted can be visible light, infrared light, or ultraviolet light, or mixtures of these. The detection optics will of course be such that they can detect the expected emitted radiation.)

Considering first the embodiment shown in Figure 1, the radiation emitted from transmission means 5 is focused by lens 47 onto signal generator 52, either directly or via filter 50 and lens 52. Signal generator 57 detects the incoming light radiation from lens 52 and in response to its intensity, wavelength distribution or both, generates a signal dependent on the specific intensity or wavelength distribution detected. This signal is passed to signal processor 56 in which the signal is compared to a previous correlation of signal characteristics to determine the required object or environment temperature. Signal processor 56 also generates, in response to that correlation, an output signal (commonly a video, meter or gauge read-out, and may also generate a permanent record such as a trace on a recording chart) indicating in real time the observed temperature of the target object or environment. The signal processor 56 can also control the gain and read the offset of system amplifiers (or programmable amplifiers) and the voltage output of the amplifiers. Where the property of interest is intensity, the filters may be optional. When the property of interest is wavelength distribution, the filters serve to isolate specific bands of wavelengths.

In another embodiment, shown in Figure 31, beam splitting is utilized and the two portions of the beam are compared to determine the observed temperature. In an alternative usage of the embodiment of Figure 31, the two paths may be designed (as with different filters, detectors, etc.) to be responsive to different light radiation wavelengths, so that one path may be most efficiently used for measurements of lower object or environment temperatures while the other path is used for high temperature measurements. In these cases the light passing through the light guiding means 40/42 will be focused by lens 47 and passed through splitter 48 to filters 50 and 51 (the latter via mirror 49) and then, via lenses 52 and 53, to detectors 54 and 55.

The radiation propagating through filters 50 and 51 will be focused by lenses 52 and 53 on two detectors 54 and 55, which detect the radiation and convert the detected radiation to amplified signals which are passed to processing means 56 for signal processing to determine the temperature of the emission means. Filters 50 and 51 may be band-pass filters, long-wavelength-pass filters, short-wavelength-pass filters or any combination thereof. Preferably filters 50 and 51 are narrow band filters centered at two different wavelengths between 0.2 and 7.0 um to obtain maximum sensitivity.

The signal from the filter centered at the longer wavelength or the signal from the filter centered at the shorter wavelength may be used to read temperatures from near ambient up to 3500°C (6330°F), although the principal temperature range of interest may be anywhere in the recognized high-temperature range above about 500°C (930°F). The ratio of the two signals may also be used in order to compensate for intensity fluctuations due to the mechanical movement of the low temperature fiber, background noise and other undesired effects.

The spectral radiant emittance $I_\lambda \, d\lambda$ of a black body into a hemisphere per unit area of the black body radiation source in the wavelength range from $\lambda$ to $\lambda + d\lambda$ is given by Equation 1:

$$I_\lambda d\lambda \;=\; \frac{C_1}{\lambda^5} \cdot \frac{1}{e^{C_2/\lambda T} - 1} \, d\lambda \tag{1}$$

where $C_1 = 3.74 \times 10^{-12}$ watt-cm$^2$ and $C_2 = 1.438$ cm-°K, according to the Planck radiation law. The radiant flux $P(\lambda,T)$ emitted at the wavelength by the black body (or gray body) emission means source at temperature T is given by Equation 2:

$$P(\lambda,T) \;=\; \frac{A \cdot \epsilon(\lambda,T) \cdot C_1}{\lambda^5 (e^{C_2/\lambda T} - 1)} \tag{2}$$

where A is the exit area of the source and $\epsilon(\lambda,T)$ is the emissivity of the radiation-emitting material (1 for a perfect black body and between 0 and 1 for gray body). The photo diode currents $I_n(T)$ at detectors 54 and 55 will be given by, respectively, Equations 3 and 4:

$$I_1(T) \;=\; \int_0^\infty C(\lambda,T) \cdot K(\lambda,T) \cdot T_1(\lambda) \cdot P(\lambda,T) \cdot R(\lambda,T) \, d\lambda \tag{3}$$

and

$$I_2(T) \;=\; \int_0^\infty C(\lambda,T) \cdot K(\lambda,T) \cdot T_2(\lambda) \cdot P(\lambda,T) \cdot R(\lambda,T) \, d\lambda \tag{4}$$

where $C(\lambda,T)$ is the capturing efficiency defined as the ratio of the flux captured by the lenses to the total flux expressed by Equation 2, $R(\lambda,T)$ is the responsivity of the detectors, $K(\lambda,T)$ is the coupling efficiency defined as the ratio of the total flux coupled by the lens 27 or 31 into the light guiding means 39/43 to the total flux entering the lens 31, $T_1(\lambda)$ is the total transmittance of the low temperature light guiding means 39 or 43, the beam splitter 48 and filter 50, and $T_2(\lambda)$ is the total transmittance of the low temperature light guiding means 39, the beam splitter 48 and filter 51. The current $I_1$ at the detector 54 and the current $I_2$ at the detector 55 will be amplified by programmable gain amplifiers. The gains, offsets and the voltage outputs of two detectors can be processed by any of a number of known electronic comparison algorithms, either digital or analog, to generate composite signal which is directly related to the initial temperature of the emission means 1, and therefore to the temperature of the object or environment.

It will be evident that the detection system 46/57/56 can comprise any number of detectors with a large number of filters and/or prisms, grating, mirrors, splitters and lenses to determine the temperature. One can also measure multiple temperatures distributed inside objects such as a turbine engine by using a number of the sensors with many combinations of filters, detectors, beam splitters, lenses, and demultiplexers and a signal processor.

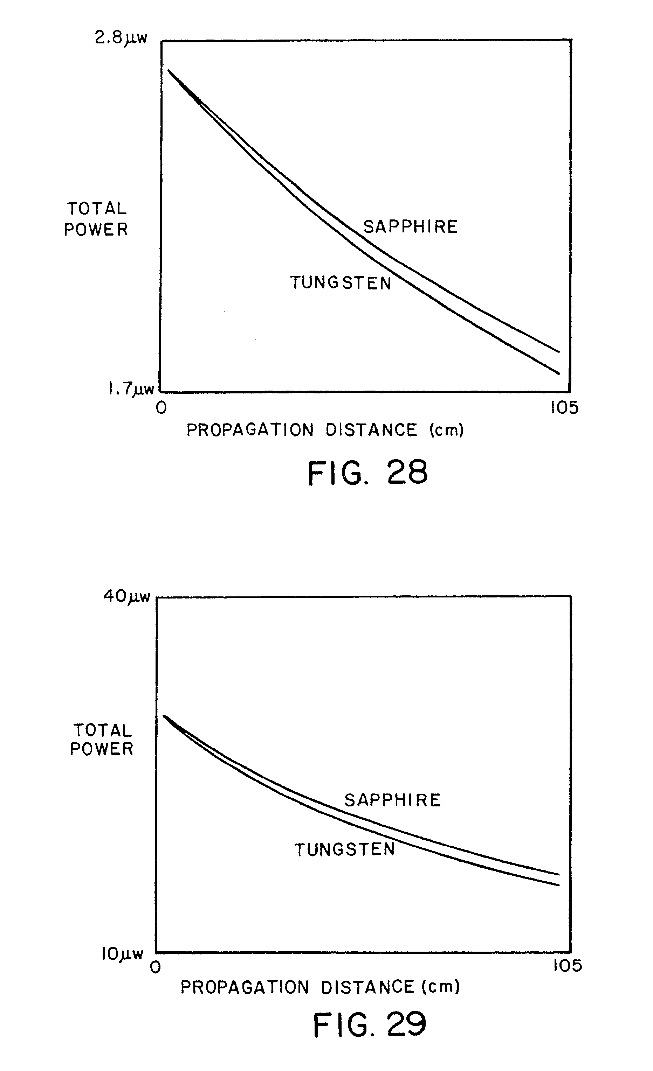

Figure 28 shows that the total power of the radiant flux confined by the high-temperature hollow waveguide made of sapphire and total power in the high-temperature hollow waveguide made of tungsten in the wavelength range 0.8-1.0 $\mu$m along the propagation distance up to 1 m. Figure 29 shows the total power confined by the high temperature hollow waveguide made of sapphire and the total power in the high- temperature hollow waveguide made of tungsten in the wavelength range 1.1-1.3 $\mu$m along the propagation distance up to 1 m. Here, we assumed that the temperature of the cavity emitting temperature-induced radiation was 727°C. Upper curves in Figures 28 and 29 are for a hollow waveguide made of sapphire and the lower curves are for a hollow waveguide made of tungsten. As is seen in figure 28, the total power (assumed uniformly distributed among lower 288 modes) at the cavity emitting temperature-induced radiation drops to 68% of its original total power after propagating one meter in a sapphire hollow waveguide and also drops to 65% after one meter in a tungsten hollow waveguide. Figure 29 also shows that the total power of the radiant flux striking a detector after passing through a one meter sapphire hollow waveguide and an optical band-pass filter (with transparent wavelength range between 1.1 $\mu$m and 1.3 $\mu$m) is 16.3 $\mu$W and the total power of the radiant flux at a detector after one meter in a tungsten hollow waveguide and the same filter is 15.6 $\mu$W. In these computations we assume that the emitting area of the cavity emitting temperature-induced radiation is 0.00196 cm$^2$, the inner diameter of the hollow waveguide is 0.05 cm, the temperature of the cavity emitting temperature-induced radiation is 727°C and the emissivity of the cavity emitting temperature-induced radiation is unity. We also assume that about 20% of the radiation emitted by the cavity emitting temperature-induced radiation is excited uniformly among 288 modes. For simplicity, the refractive index of sapphire is taken as 1.74 and the real part and the imaginary part of the refractive index of tungsten are 3.0 and 4.2, respectively. This should be a reasonable assumption because the dispersion and the thermo-optic constant of each material are small.

To see the optical loss due to bending, we plot the attenuation of optical power versus the bending radius of the hollow waveguide. Figure 30 shows the relation between the optical loss at wavelength of 1 $\mu$m and the bending radius of the hollow waveguide (made of sapphire) for two different inner diameters. The upper and lower curves show the optical loss of the light propagating along 5 cm long curved hollow waveguides having 200 $\mu$m and 500 $\mu$m inner diameters, respectively. This shows that the optical loss due to bending in a hollow waveguide may reduce the precision of the hollow waveguide high-temperature sensor and also shows that the optical loss due to the bending can be minimized substantially by properly designing the hollow waveguide. The bending loss is less severe in the metallic hollow waveguide than in the dielectric hollow waveguide. This bending can also be almost completely eliminated with thick and short tubing.

It will be evident that there are numerous embodiments of this invention which, while not expressly described above, are clearly within the scope and spirit of the invention. The above description is therefore to be considered exemplary only, and the scope of the invention is to be limited solely by the appended claims.

## Claims

1. Apparatus for measuring the temperature of an object or environment of up to about 3500°C, which comprises:
detection means to absorb heat emitted from said object or environment and to emit light radiation in response to said absorption of said heat, the wavelength distribution and intensity properties of said light radiation being functions of the temperature of said object or environment;
light radiation guiding and transmitting means in the form of a hollow conduit to receive at least a portion of said emitted responsive light radiation and to transmit it to an optics array;
said optics array comprising means to detect said portion of said emitted responsive light radiation and from at least one of said properties of wavelength distribution and intensity, to generate an electrical signal having at least one measurable property directly related to said detected properties; and
signal processing means connected to said optics array to receive said signal and to determine therefrom the temperature of said object or environment.

2. Apparatus as in Claim 1 wherein said light guiding and transmitting means is a hollow waveguide in the form of a hollow elongated tube.

3. Apparatus as in Claim 2 further comprising fiber optics means disposed intermediate said light guiding and transmitting means and said optics array to transmit the light radiation from said light guiding and transmitting means to said optics array.

4. Apparatus as in Claim 2 wherein said radiation property detected is a predetermined portion of the wavelength distribution thereof and the temperature of the object or environment is determined by comparison thereof with a predetermined correlation of wavelength distribution and temperature.

5. Apparatus as in Claim 4 wherein there are a plurality of portions of the wavelength distribution detected, and the temperature of the object or environment is determined by comparison of those portions with each other and with a predetermined correlation of the differences therebetween and temperature.

6. Apparatus as in Claim 2 wherein the radiation property detected is the intensity thereof and the temperature of the object or environment is determined by comparison thereof with a predetermined correlation of intensity and temperature.

7. Apparatus as in Claim 2 wherein said detection means comprises a black body or gray body emitter in the form of a cavity or a metal, ceramic or composite metal and ceramic body which is heated by the radiation from the object or environment to the temperature of the object or environment and in response to said heating emits radiation characteristic of the temperature of the emitter.

8. Apparatus as in Claim 7 wherein said emitter is a black body or gray body cavity.

9. Apparatus as in Claim 8 wherein said emitter is a black body cavity.

10. Apparatus as in Claim 7 wherein said emitter is in the form of a spherical cavity.

11. Apparatus as in Claim 7 wherein said emitter is in the form of a cylindrical cavity.

12. Apparatus as in Claim 11 wherein said cylindrical cavity is in the form of a cylindrical hole formed in a solid rod.

13. Apparatus as in Claim 7 wherein said emitter is in the form of a conical cavity.

14. Apparatus as in Claim 7 wherein said emitter is in the form of a dot, plate, film or coating.

15. Apparatus as in Claim 14 wherein said emitter is formed of metal or ceramic material or a combination thereof.

16. Apparatus as in Claim 15 wherein said metal comprises tungsten, tantalum, molybdenum, iridium, niobium or carbides or alloys thereof or stainless steel.

17. Apparatus as in Claim 15 wherein said ceramic material comprises sapphire, zirconia, yttria, magnesia, titania, quartz, diamond or graphite.

18. Apparatus as in Claim 3 wherein said intermediate fiber optics means comprises at least one optical fiber.

19. Apparatus as in Claim 18 wherein said intermediate fiber optics means comprises a plurality of serially aligned optical fibers joined by light coupling means.

20. Apparatus as in Claim 19 wherein at least one of said optical fibers is of higher temperature resistance than at least one of the others of said plurality of said fibers and said more resistance fiber is disposed at the light exit of said light guiding and transmitting means.

21. Apparatus as in Claim 20 wherein said plurality of optical fibers has an extended length and said optics array is disposed at a location remote from said object or environment whose temperature is to be measured.

22. Apparatus as in Claim 2 wherein said hollow waveguide is coated on the inner or outer surface thereof with a dielectric film.

23. Apparatus as in Claim 2 wherein said hollow waveguide is coated on the inner or outer surface thereof with a metallic film.

24. Apparatus as in Claim 2 wherein said hollow waveguide is sealed and evacuated.

25. Apparatus as in Claim 2 wherein said hollow waveguide is sealed and filled with an inert gas.

26. Apparatus as in Claim 2 further comprising means to prevent entry of stray light into said detection means and said light guiding and transmitting means.

27. Apparatus as in Claim 26 comprising opaque light shielding means surrounding said detection means and said light guiding and transmitting means.

28. Apparatus as in Claim 1 wherein said light guiding and transmitting means is in the form of a hollow tube having at least one focusing lens disposed therein.

29. Apparatus as in Claim 28 wherein there are a plurality of lenses arranged in series in the path of said emitted radiation within said hollow tube.

30. Apparatus as in Claim 29 comprising two lenses.

31. Apparatus as in Claim 28 wherein said detection means has dimensions sufficiently small compared to said lens that said detection means functions as a point source of said emitted radiation.

32. Apparatus as in Claim 28 further comprising fiber optics means disposed intermediate said light guiding and transmitting means and said optics array to transmit the light radiation from said light guiding means to said optics array.

33. Apparatus as in Claim 28 wherein said radiation property detected is a predetermined portion of the wavelength distribution thereof and the temperature of the object or environment is determined by comparison thereof with a predetermined correlation of wavelength distribution and temperature.

34. Apparatus as in Claim 33 wherein there are a plurality of portions of the wavelength distribution detected, and the temperature of the object or environment is determined by comparison of those portions with each other and with a predetermined correlation of the differences therebetween and temperature.

35. Apparatus as in Claim 28 wherein the radiation property detected is the intensity thereof and the temperature of the object or environment is determined by comparison thereof with a predetermined correlation of intensity and temperature.

36. Apparatus as in Claim 28 wherein said detection means comprises a black body or gray body emitter in the form of a cavity or a metal, ceramic or composite metal and ceramic body which is heated by the radiation from the object or environment to the temperature of the object or environment and in response to said heating emits radiation characteristic of the temperature of the emitter.

37. Apparatus as in Claim 36 wherein said emitter is a black body or gray body cavity.

38. Apparatus as in Claim 37 wherein said emitter is a black body cavity.

39. Apparatus as in Claim 37 wherein emitter is in the form of a spherical cavity.

40. Apparatus as in Claim 37 wherein said emitter is in the form of a cylindrical cavity.

41. Apparatus as in Claim 40 wherein said cylindrical cavity is in the form of a cylindrical hole formed in a solid rod.

42. Apparatus as in Claim 37 wherein said emitter is in the form of a conical cavity.

43. Apparatus as in Claim 37 wherein said emitter is in the form of a dot, plate, film or coating.

44. Apparatus as in Claim 43 wherein said emitter is formed of a metal or ceramic material or combination thereof.

45. Apparatus as in Claim 44 wherein said metal comprises tungsten, tantalum, molybdenum, iridium, niobium or carbides or alloys thereof or stainless steel.

46. Apparatus as in Claim 44 wherein said ceramic material comprises sapphire, zirconia, yttria, magnesia, titania, quartz, diamond or graphite.

47. Apparatus as in Claim 32 wherein said intermediate fiber optics means comprises at least one optical fiber.

48. Apparatus as in Claim 47 wherein said intermediate fiber optics means comprises a plurality of serially aligned optical fibers joined by light coupling means.

49. Apparatus as in Claim 48 wherein at least one of said optical fibers is of higher temperature resistance than at least one of the others of said plurality of said fibers and said more resistance fiber is disposed at the light exit of said light guiding and transmitting means.

50. Apparatus as in Claim 46 wherein said plurality of optical fibers has an extended length and said optics array is disposed at a location remote from said object or environment whose temperature is to be measured.

51. Apparatus as in Claim 28 further comprising means to prevent entry of stray light into said detection means and said light guiding and transmitting means.

52. Apparatus as in Claim 51 comprising opaque light shielding means surrounding said detection means and said light guiding and transmitting means.

53. A method of measuring the temperature of an object or environment of up to about 3500°C, which comprises:

detecting heat emitted from said object or environment;

emitting light radiation in response to said detection of said heat, the wavelength distribution and intensity properties of said light radiation being functions of said temperature of said object or environment;

guiding and transmitting at least a portion of said emitted responsive light radiation through a hollow light guiding and transmitting means to an optics array;

in that optics array detecting said transmitted portion of said emitted responsive light radiation and from at least one of its properties of wavelength distribution and intensity generating a signal having at least one measurable property directly related to said detected properties; and

processing that signal to determine therefrom said temperature of said object or environment.

54. A method as in Claim 53 wherein said radiation property detected is a predetermined portion of the wavelength distribution thereof and said temperature of said object or environment is determined by comparison thereof with a predetermined correlation of wavelength distribution and temperature.

55. A method as in Claim 54 wherein there are a plurality of portions of the wavelength distribution detected, and said temperature of said object or environment is determined by comparison of those portions with each other and with a predetermined correlation of the differences therebetween and temperature.

56. A method as in Claim 53 wherein said radiation property detected is the intensity thereof and the temperature of the object or environment is determined by comparison thereof with a predetermined correlation of intensity and temperature.

57. A method as in Claim 53 wherein said detecting and emitting is performed by a black body or gray body emitter in the form of a cavity or a metal, ceramic or composite metal and ceramic body which is heated by the radiation from the object or environment to the temperature of the object or environment and in response to said heating emits radiation characteristic of the temperature of the emitter.

FIG. I

FIG. 31

13

FIG. 6

FIG. 7

FIG. 8

FIG. 9

FIG. 10

FIG. 2

FIG. 3

FIG. 4

FIG. 5

FIG. 11

FIG. 12

FIG. 13

FIG. 14

FIG. 15

EP 0 425 229 A1

FIG. 16

FIG. 17

FIG. 18

15
7
14
16

FIG. 22

15
7
14

FIG. 19

15
7
14

FIG. 23

14   15
7
14

FIG. 20

15
7
14

FIG. 24

14   15
7
14

FIG. 21

15
7
14

FIG. 25

15
7
14

EP 0 425 229 A1

FIG. 26

FIG. 27

FIG. 30

FIG. 28

FIG. 29

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US - A - 4 679 934 (GANGULY et al.) * Column 4, line 42 - column 10, line 35; column 12, line 41 - column 13, line 25; fig. 1,2 * | 1,3-9, 14-16, 18-21, 53-57 | G 01 J 5/08 |
| X | US - A - 4 859 079 (WICKERSHEIM et al.) * Column 3, line 40 - column 7, line 55; fig. 1-7 * | 1,3-9, 11,18- 21,53- 57 | |
| X | US - A - 4 794 619 (TREGAY) * Column 4, line 36 - column 6, line 49; fig. 1-12 * | 1,3-9, 12,18- 21,53- 57 | |
| A | US - A - 4 842 391 (KIM et al.) | | |
| A | US - A - 4 824 195 (KHOE) | | TECHNICAL FIELDS SEARCHED (Int. Cl.5) |
| D,A | US - A - 4 313 344 (BROGARDH et al.) * Column 4, line 41 - column 5, line 2; fig. 3a-3d * | 1,7,14 | G 01 J 5/00 G 01 K 11/00 G 02 B 6/00 |
| D,A | US - A - 4 468 771 (ZHUKOV et al.) * Column 8, line 36 - column 11, line 29; fig. 1-6 * | 1,3 | |
| D,A | US - A - 4 576 486 (DILS) * Column 4, line 5 - column 9, line 42; fig. 1-3 * | 1,3-9, 11,14- 16,18- 21,53- 57 | |

The present search report has been drawn up for all claims

| Place of search | Date of completion of the search | Examiner |
|---|---|---|
| VIENNA | 18-12-1990 | BAUER |

EPO FORM 1503 03.82 (P0401)

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | --<br>US - A - 4 326 798<br>(KAHN)<br>* Column 2, line 44 - column 4, line 35; fig. 1-2c *<br>---- | 1,3 | |
| | | | TECHNICAL FIELDS SEARCHED (Int. Cl.5) |

The present search report has been drawn up for all claims

| Place of search | Date of completion of the search | Examiner |
|---|---|---|
| VIENNA | 18-12-1990 | BAUER |